# EUROPÄISCHE PATENTSCHRIFT

(11) **EP 1 140 569 B1**
(45) Veröffentlichungstag und Bekanntmachung des Hinweises auf die Patenterteilung: **28.08.2002**
(21) Anmeldenummer: 99968303.0
(22) Anmeldetag: 10.12.1999
(51) Int. Cl.: B60R 21/16

(54) **AIRBAGMODUL**
AIRBAG MODULE
MODULE AIRBAG

(30) Priorität: 30.12.1998 DE 19860932
(43) Veröffentlichungstag der Anmeldung: 10.10.2001
(73) Patentinhaber: TAKATA - PETRI Aktiengesellschaft, 63743 Aschaffenburg (DE); AUDI AG, 85045 Ingolstadt (DE)
(72) Erfinder: ECKERT, Nick, D-12587 Berlin (DE); HAASE, Carsten, D-33739 Bielefeld (DE); KAMM, Martin, D-13469 Berlin (DE); RADTKE, Gerd, D-13055 Berlin (DE); RION, Claude, D-85051 Ingolstadt (DE); SPIES, Udo, D-85080 Gaimershaim (DE); NEFF, Martin, D-85055 Ingolstadt (DE)
(74) Vertreter: Baumgärtel, Gunnar, Dr.
(86) Internationale Anmeldenummer: DE9904030
(87) Internationale Veröffentlichungsnummer: WO00040439

(56) Entgegenhaltungen:
- DE-U- 9 405 143
- DE-U- 29 713 111
- US-A- 5 575 497
- US-A- 5 577 765
- US-A- 5 746 447

## Beschreibung

Die Erfindung betrifft ein Airbagmodul nach dem Oberbegriff des Anspruchs 1.

Es ist üblich, daß Airbagmodule direkt vor dem Insassen im Fahrzeug eingebaut sind, da der gefüllte Gassack seine Schutzfunktion bei einem Frontallaufprall symmetrisch zur Körpermittelachse des Insassen erfüllt. Es ist deshalb bekannt, den Fahrerairbag im Lenkrad und den Beifahrerairbag vor dem Insassen in der Instrumententafel anzuordnen. Da aber zunehmend der Wunsch besteht, den für den Beifahrerairbag bisher benutzten Bereich der Instrumententafel für andere Zwecke zu verwenden, müßte das Airbagmodul an anderer Stelle angeordnet werden.

Aus der DE 196 24 371 A1 ist ein Airbag bekannt, der in der Mittelkonsole des Fahrzeugs eingebaut ist. Dieser Airbag entfaltet sich im Crashfall im wesentlichen quer zur Fahrtrichtung. Nachteilig dabei ist, daß der Insasse in einer vorderen Sitzposition seitlich angeschossen wird oder daß die Entfaltung des Airbags vor dem Insassen vollständig verhindert wird.

Die US-A-5,575,497 offenbart ein an der Rückenlehne eines Fahrzeugsitzes angeordnetes Airbagmodul, bei dem der Gassack aus zwei über Ventile miteinander verbundenen Gassackteilen besteht. Bei einem Entfalten des Gassacks entfaltet sich zunächst ein Gassackteil zwischen dem Fahrzeuginsassen und der Seitentür. Nachdem ein bestimmter Druck erreicht ist, öffnen sich die Ventile und in einer zweiten Phase erfolgt eine Entfaltung eines Gassackteils quer zum Fahrzeuginsassen entlang des Armaturenbereichs. Auch bei dieser Anordnung besteht die Gefahr, daß der Insasse in einer vorderen Sitzposition seitlich durch den sich entfaltenden Gassack angeschossen oder die Entfaltung des Airbags vor dem Insassen vollständig verhindert wird.

Demgemäß liegt der Erfindung die Aufgabe zugrunde, ein Airbagmodul mit einem Gassack, der sich nacheinander in mehrere Richtungen und dabei zuletzt in Richtung des Insassen entfaltet, dahingehend weiterzubilden, daß auch bei einem in Längsrichtung des Fahrzeuges vor dem Insassen sowie seitlich der erforderlichen Wirkrichtung des Airbags im Crashfall angeordneten Airbag eine sichere Entfaltung in Richtung des zu schützenden Insassen gewährleistet wird.

Erfindungsgemäß wird diese Aufgabe durch ein Airbagmodul mit den Merkmalen des Anspruchs 1 gelöst.

Danach ist vorgesehen, daß die Abtrennung des Gassacks in zwei Kammern im wesentlichen quer zur Längsachse des Fahrzeugs verläuft, der Gassack um eine Achse senkrecht zur Anschlußöffnung des Gassacks verdreht mit dem Modulgehäuse verbunden ist und im aufgeblasenen Zustand des Gassacks ein Moment um die Achse vorhanden ist, durch das der Gassack im Bereich der ersten Kammer gegen ein Fahrzeugteil andrückbar und so in seiner Lage stabilisierbar ist.

Durch diese Anordnung des Airbagmoduls wird erreicht, daß der Gassack zunächst in Richtung der Achse der Anschlußöffnung entfaltet wird. Sofern diese Achse nicht quer zum Insassen verläuft, wird der Gassack in einer zweiten Entfaltungsphase aufgrund der im wesentlichen quer verlaufenden Abtrennung quer zum Insassen bzw. zur Fahrzeuglängsachse entfaltet. Aufgrund der erfindungsgemäßen Anordnung entsteht bei der Entfaltung der ersten Kammer des Gassacks ein Moment, durch das der Gassack sicher in die für den Crashfall erforderliche Position bezüglich des Insassen gebracht wird. In einer dritten Entfaltungsphase tritt das Gas durch die Überströmöffnung dann in die zweite Kammer ein, so daß der Gassack in Richtung des Insassen entfaltet wird. Die Entfaltung erfolgt dabei von vorne in Richtung auf den Insassen, so daß nicht die Gefahr besteht, daß der Insasse von dem Gassack seitlich angeschossen wird.

Es ist zweckmäßig, daß die erste Kammer quer zur Abtrennung kürzer und damit kleiner ist als die zweite Kammer. Dadurch kann sich der Gassack in einer frühen Phase zunächst vorwiegend quer zum Insassen entfalten, wodurch der Gassack in die für den Chrashfall erforderliche Position gebracht wird.

Das Airbagmodul ist für einen Beifahrerairbag in der Fahrzeugmitte an der Armaturentafel angeordnet. Die Anschlußstelle für den Gassack befindet sich hierbei zweckmäßig an der Oberseite der Armaturentafel. Die Anschlußöffnung des Gassacks ist einseitig in einem der Mitte des Fahrzeugs zugewandten Abschnitt der ersten Kammmer vorgesehen und die größere Überströmöffnung zur Verbindung der beiden Kammern ist an der Seite des Gasacks vorgesehen, die der rechten Fahrzeugseite zugewandt ist. Zusätzlich ist eine kleinere Überströmöffnung an der gegenüberliegenden Seite eingebracht. Weiterhin ist der Gassack so mit dem Modulgehäuse verbunden, daß er sich in ausgebreiteter, nicht aufgeblasener Lage schräg in Richtung Beifahrer, vorzugsweise unter einem Winkel von 45° bezüglich der Längsachse des Fahrzeugs in Richtung Beifahrer erstreckt. Als stabilisierendes Fahrzeugteil für den aufgeblasenen Gassack ist in diesem Fall die Windschutzscheibe vorgesehen. Als stabilisierendes Fahrzeugteil kann auch die A-Säule dienen.

Bei einer solchen erfindungsgemäßen Anordnung des Beifahrerairbagmoduls wird der Gassack zuerst nach oben aus der Armaturentafel entfaltet. Danach wird er quer zum Insassen in Richtung der A-Säule entfaltet und erst danach in Richtung des Insassen. Infolge der beschriebenen schrägen Einbaulage des Gassacks entsteht bei der Entfaltung um die Gassackanbindung an dieser ein positives Moment um die Vertikalachse, so daß der Gassack gegen die Windschutzscheibe gedrückt und somit stabilisiert wird. Durch den Einbau des Airbagmoduls in der Mitte der Armaturentafel wird weiterhin der Raum unterhalb der Armaturentafel im Bereich des Handschuhfachs für andere Einbauten frei.

Bei dem Beifahrerairbag ist der gefaltete Gassack in einem unter der Armaturentafel angeordneten topfartigen Modulgehäuse untergebracht, in das von unten ein Rohrgasgenerator ragt.

In einer weiteren Ausgestaltung ist als kleinere Kammer eine gesonderte Tasche im Gassack vorgesehen. Diese Tasche ist zweckmäßig an jeweils mindestens einer Stelle mit gegenüberliegenden Seiten des Gassacks verbunden, wobei diese Verbindung direkt ober über Fangbänder erfolgen kann. Dadurch wird der zusätzliche Vorteil erreicht, daß die Ausdehnung des Gassacks in dieser Richtung und damit bei dem beschriebenen Beifahrerairbag in vertikaler Richtung begrenzt wird, wodurch eine stabile, flächige Auflage auf der Armaturentafel begünstigt wird.

Besonders vorteilhaft ist für diese erfindungsgemäße Airbaganordnung ist ein als 2D-Gassack ausgebildeter Gassack mit Unter- und Oberplatte, die am Umfang miteinander verbunden sind, wobei die Anschlußöffnung des Gassacks an das Modulgehäuse im Bereich der Unterplatte vorgesehen ist.

Die Tasche ist zweckmäßig mittels der Umfangsnaht der Oberund Unterplatte befestigt und im mittleren Bereich bogenförmig mit der Ober- und Unterplatte verbunden.

In einer bevorzugten Ausführungsform ist der Gassack in ausgebreiteter, nicht aufgeblasener Lage rechteckförmig und weist abgerundete Ecken auf.

Weiterhin ist es zweckmäßig, daß der Gassack so gefaltet ist, daß bei dem mit der Anschlußöffnung nach unten ausgebreiteten Gassack der von der Anschlußöffnung ausgehende größere Abschnitt des Gassacks in Richtung des Gasgenerators nach unten eingeschlagen ist und gerafft im Modulgehäuse untergebracht ist, und daß der von der Anschlußöffnung ausgehende kleinere Abschnitt des Gassacks über dem gerafften Teil des Gassacks im Modulgehäuse liegt. Dabei stellt der nach unten eingeschlagene einen ersten Part, der darüber geraffte Teil des Gassacks einen zweiten Part und der darüberliegende kleinere Abschnitt des Gassacks einen dritten Part dar. Nach Zündung des Gassacks entfaltet sich zuerst der dritte Part, anschließend der zweite Part und zum Schluß der erste Part.

Die Erfindung soll in Ausführungsbeispielen anhand von Zeichnungen erläutert werden. Es zeigen:
- Fig. 1: die Entfaltungstrajektorie des Gassacks eines erfindungsgemäßen Beifahrer-Airbagmoduls;
- Fig. 2.1: einen Schnitt durch einen Gassack für ein Beifahrer-Airbagmodul der Fig. 1;
- Fig. 2.2: eine Draufsicht auf den Gassack nach Fig. 2.1;
- Fig. 3.1 bis 3.4: unterschiedliche Stadien der Gasackentfaltung von oben gesehen;
- Fig. 4.1 bis 4.8: unterschiedliche Stadien der Gassackfaltung von der Seite und von oben gesehen;
- Fig. 5.1: einen Schnitt durch ein gemäß Fig. 1 unterhalb der Armaturentafel angeordnetes Beifahrer-Airbagmodul;
- Fig. 5.2: eine Draufsicht auf das Airbagmodul nach Fig. 5.1;
- Fig. 6: ein erfindungsgemäßes Beifahrerairbagmodul, daß in der Sitzlehne eingebaut ist;
- Fig 7: ein erfindungsgemäßes Beifahrerairbagmodul, das in der Fahrzeugtür eingebaut ist;
- Fig. 8a-c: unterschiedliche Ausführungsformen des Airbagmoduls;
- Fig. 9a-h: unterschiedliche Formen des Airbaggehäuses.

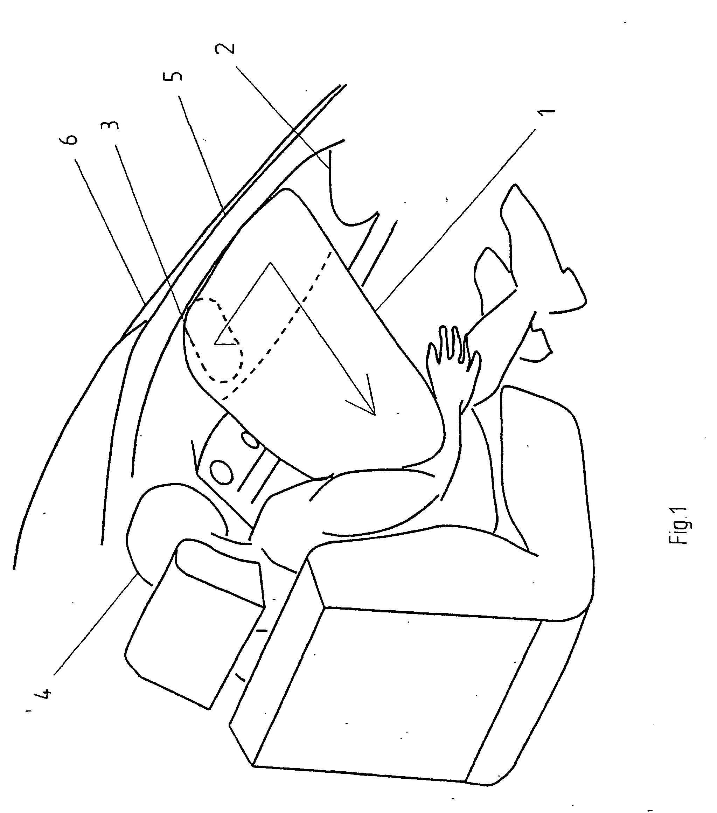

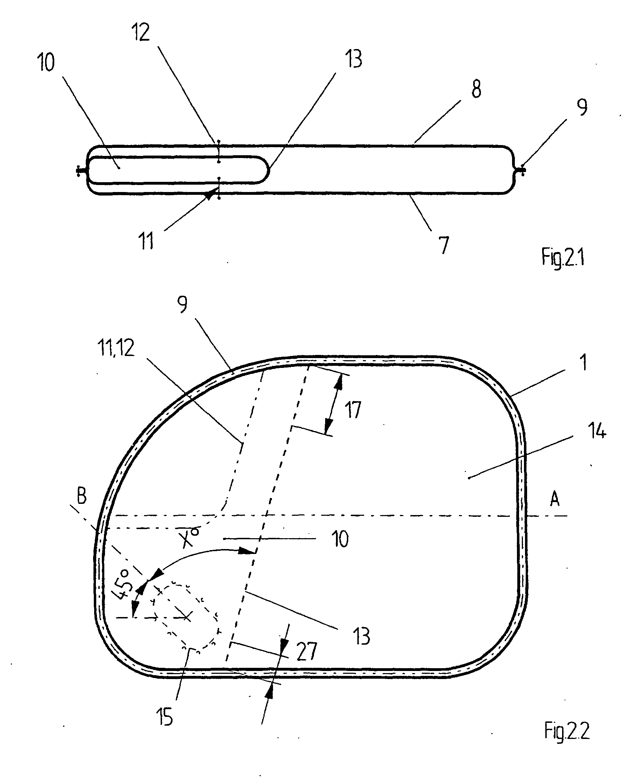

In der Fig. 1 ist ein Ausschnitt aus einem Kraftfahrzeug mit einem erfindungsgemäß angeordneten Beifahrer-Airbagmodul und dem vor einem Beifahrer 4 entfalteten Gassack dargestellt. Das Beifahrer-Airbagmodul mit einem Gassack 1 ist unter einer Armaturentafel 2 in der Mitte des Kraftfahrzeuges angeordnet, wobei eine Austrittsöffnung 3 auf der Oberseite der Armaturentafel 2 ebenfalls in der Mitte des Kraftfahrzeuges vorgesehen ist. Diese Austrittsöffnung 3 liegt also links vor dem Beifahrer 4, so daß sich ein bekannter Gassack im wesentlichen links neben dem Beifahrer 4 und nach oben entfalten würde und damit für diesen keinen Schutz bei einem Frontalaufprall des Kraftfahrzeuges bieten könnte.

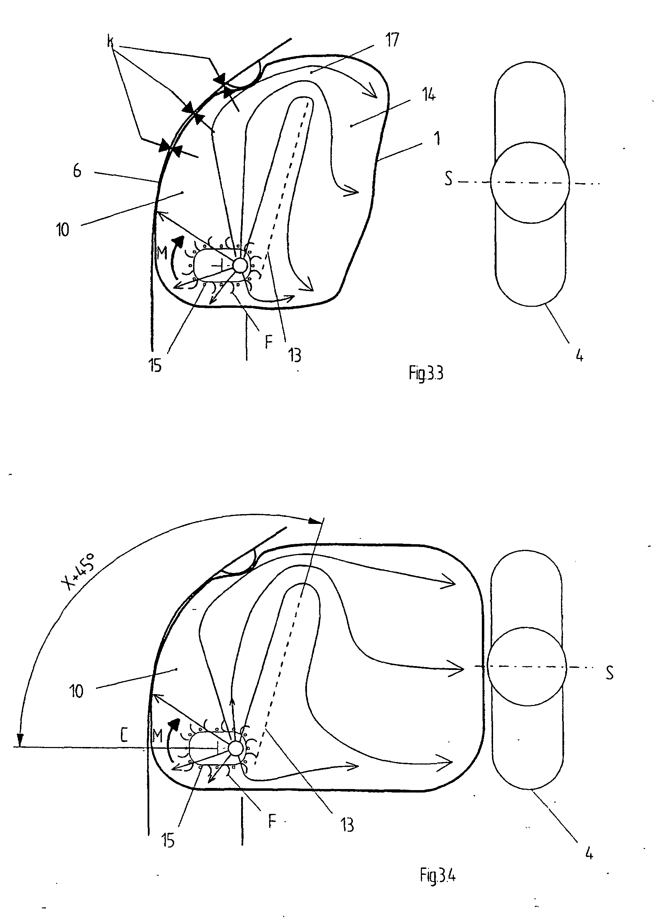

Wie aus der Fig. 1 ersichtlich ist, weist die erfindungsgemäße Anordnung eine solche Entfaltungstrajektorie auf, daß sich der Gassack 1 trotz der dargestellten Anordnung der Austrittsöffnung 3 vor dem Insassen entfaltet. Der Pfeil zeigt, daß der Gassack nacheinander in drei Richtungen entfaltet wird. Es ist erkennbar, daß er zunächst nach oben entfaltet wird. In einer zweiten Phase entfaltet er sich quer zum Beifahrer 4 in Richtung der A-Säule 5 des Kraftfahrzeuges entlang der Windschutzscheibe 6, so daß er nunmehr vor dem Beifahrer symmetrisch zu dessen Körpermittelachse S (Fig. 3.3) positioniert ist. Erst danach entfaltet er sich in Richtung des Beifahrers 4.

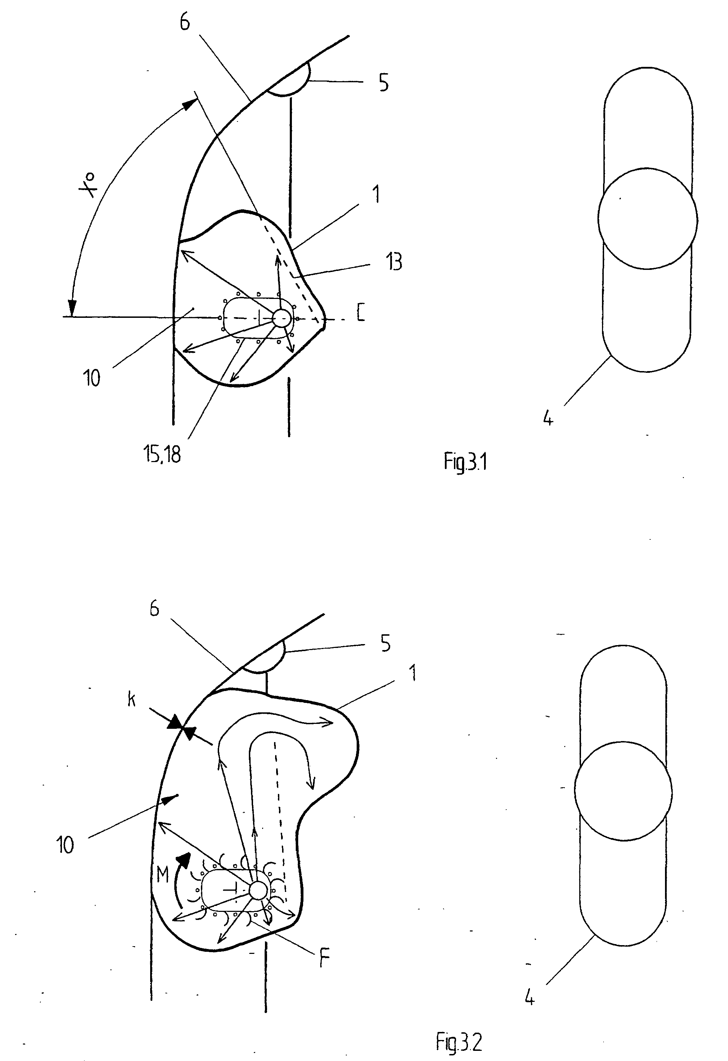

Bei dem in der Fig. 2.1 dargestellten Schnitt durch einen ausgebreiteten 2D-Gassack wurde dieser wegen der besseren Erkennbarkeit seiner Teile so dargestellt, als sei er geringfügig gefüllt. Dieser Gassack besteht aus einer Unterplatte 7 und einer Oberplatte 8 aus Gewebe, die mittels einer Umfangsnaht 9 miteinander verbunden sind.

Innerhalb des Gassacks ist eine einteilige Tasche 10 in dem Teil des Gassackes vorgesehen, die der Windschutzscheibe 6 (Figuren 3.1 - 3.4) zugeordnet ist. Diese Tasche 10 ist mittels der Umfangsnaht 9 in den Gassack eingenäht. Die Tasche 10 ist in ihrem mittleren Bereich weiterhin mit der Unterplatte 7 bzw. der Oberplatte 8 durch bogenförmig verlaufende Nähte 11 bzw. 12 verbunden. Dadurch wird die Ausdehnung der Tasche 10 bzw. des Gassackes 1 in vertikaler Richtung begrenzt, was eine stabile, flächige Auflage des Gassacks auf der Armaturentafel 2 begünstigt. Die Vorderkante 13 der Tasche 10 verläuft annähernd quer zum Beifahrer 4.

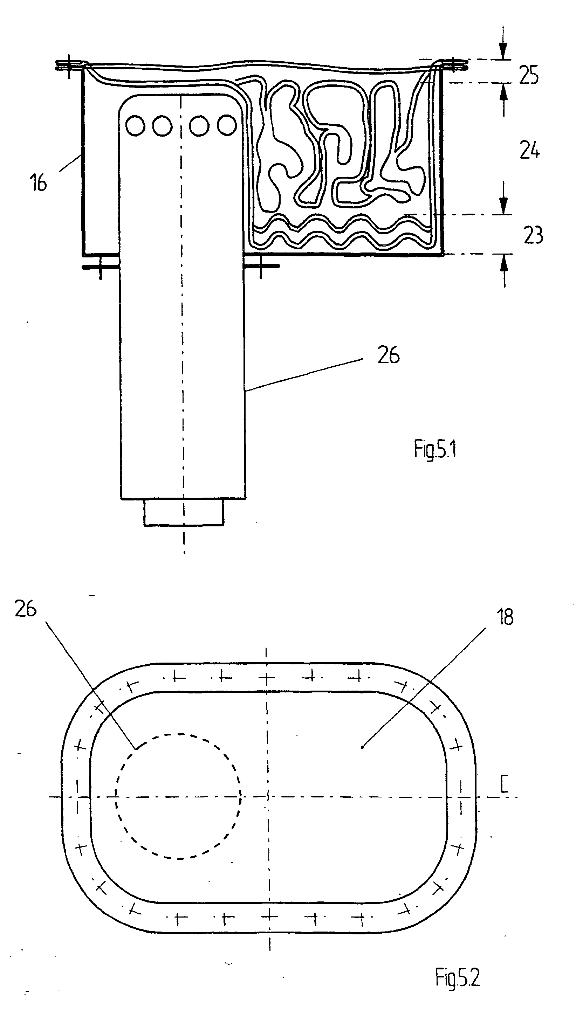

Die Tasche 10 bildet eine erste kleinere Kammer, die quer zur Vorderkante 13 kürzer ist als eine durch den übrigen Bereich des Gassacks gebildete zweite Kammer 14. In der ersten Kammer 10 ist an einer der Fahrzeugmitte zugekehrten Seite eine Anschlußöffnung 15 für die Anbindung des Gassacks 1 an ein Modulgehäuse 16 (Fig. 5.1) vorgesehen. An der gegenüberliegenden, der rechten Fahrzeugseite zugewandten Seite der ersten Kammer 10 ist eine Überströmöffnung 17 zur zweiten Kammer 14 vorgesehen. Außerdem befindet sich eine weitere Überströmöffnung 27 zur Entlastung der ersten Kammer auf der der Fahrzeugmitte zugewandten Seite. Die Anschlußöffnung 15 ist im vorliegenden Fall rechteckförmig und weist abgerundete Ecken auf. Gegenüber einer Längsachse A des Gassacks, die sich nach der Entfaltung parallel zur Längsachse des Kraftfahrzeuges erstreckt, und auch gegenüber der Längsachse C der Anschlußöffnung 18 (Fig. 3.1) am Modulgehäuse 16 ist die Längsachse B der Einströmöffnung 15 um 45° in Uhrzeigerrichtung verdreht angeordnet. Bei der Montage des Gassacks an der Anschlußöffnung 18 muß der Gassack entgegen der Uhrzeigerrichtung um 45° gedreht werden, damit die beiden Öffnungen 15 und 18 miteinander fluchten. Infolge des Drehens des Gassacks würde er sich in ausgebreiteter, nicht aufgeblasener Lage schräg in Richtung Beifahrer erstrecken.

Nach Zündung des Gasgenerators entfaltet sich der Gassack aus der Armaturentafel zunächst nach oben, wie es in Fig. 3.1 dargestellt ist. Der Winkel X^{o} zwischen der Vorderkante 13 der Tasche 10 und der Einströmöffnung 15 entspricht dem des unbenutzten Gassacks der Fig. 2.2. In einer zweiten Phase strömt weiter Gas in die Tasche 10, so daß diese sich von der Fahrzeugmitte beginnend in Richtung A-Säule 5, d.h., im wesentlichen quer zum Beifahrer 4 füllt, wobei über eine Abstützkraft k an der Windschutzscheibe 6 ein Moment M an der Gassackeinspannung im Bereich der Anschlußöffnung 15 entsteht. Dadurch wird der Gassack 1 an dieser Stelle verdreht, so daß sich Falten F bilden, wie es in Fig. 3.2 dargestellt ist.

Anschließend wird der größere Teil des Gassackes 1, der überwiegend die Kammer 14 umfaßt, über die Überströmöffnung 17 in Richtung des Beifahrers 4 gefüllt (Fig. 3.3). Dabei steigen die Abstützkräfte k an der Windschutzscheibe 6 weiter, bis das Moment M den Gassack an der Gassackeinspannung im Bereich der Anschlußöffnung 15 um 45° verdreht (Fig. 3.4), so daß zwischen der Längsachse C des Modulgehäuseanschlusses und der Vorderkante 13 der Tasche 10 nunmehr ein Winkel von X + 45° besteht. Dabei treten bei der weiteren Entfaltung zunehmend größere Falten F im Gassack an der Gassackeinspannung auf.

Aus den Figuren 3.3 und 3.4 ist erkennbar, daß sich der Gassack 1 trotz der asymmetrischen Lage der Anschlußöffnung 15 bezüglich der Körpermittelachse S des Beifahrers symmetrisch zur Körpermittelachse positioniert und anschließend in Richtung des Beckens des Beifahrers 4 entfaltet.

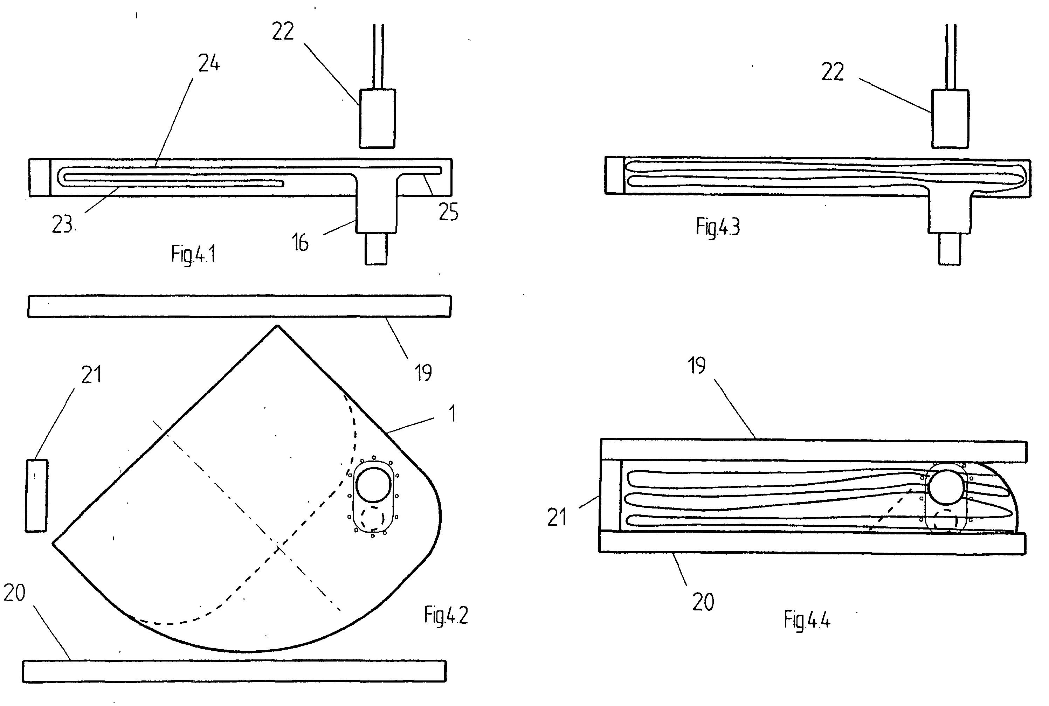

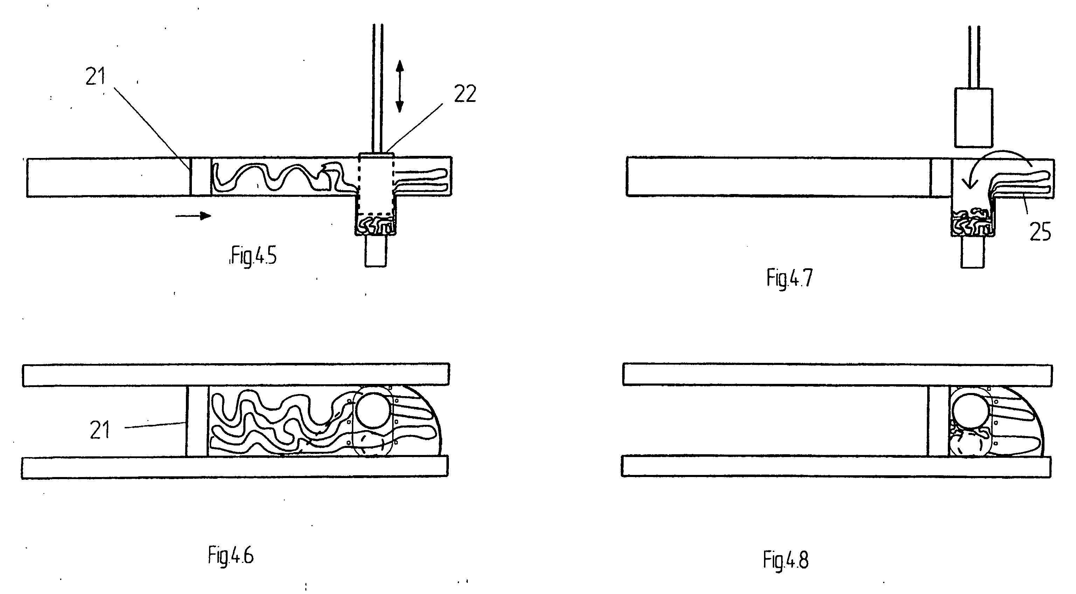

Diese dargestellte Entfaltung wird in besonderem Maße durch die nachfolgend beschriebene Faltung des Gassacks unterstützt. Dabei wird das Faltungspaket in drei Parts realiesiert. Wie aus den Figuren 4.1 und 4.2 erkennbar ist, wird ein erster Part 23 des ausgebreiteten Gassacks 1 beim Einlegen in die mit Schiebern 19, 20, 21 ausgestattete Faltvorrichtung unter einen zweiten Part 24 eingeschlagen, wobei diese beiden Parts im wesentlichen die Tasche 10 und die zweite Kammer 14 des Gassacks bilden. Danach wird der Gassack 1 mittels der Schieber 19 und 20 auf Modulbreite zusammengeschoben, wie es aus den Figuren 4.3 und 4.4 ersichtlich ist.

Anschließend wird der Gassack mittels des Schiebers 21 und eines Stempels 22 in das Modul gepreßt, wie es in den Figuren 4.5 und 4.6 dargestellt ist. Zum Schluß wird der dritte Part 25 auf den bereits verstauten Teil des Gassacks geklappt.

Aus den Figuren 5.1 und 5.2 ist die Lage des gefalteten Gassacks 1 im Modulgehäuse 16 erkennbar. In diesem ist einseitig ein Rohrgasgenerator 26 stehend angeordnet. Im wesentlichen neben diesem liegt der erste Part 23 und über diesem ebenfalls neben dem Rohrgasgenerator 26 liegt der zweite Part 24, über dem der dritte Part 25 liegt, der sich auch oberhalb des Rohrgasgenerators 26 erstreckt.

Nach Zündung des Gasgenerators wird zunächst der dritte Part 25 des Faltpaketes aus der Armaturentafel nach oben entfaltet. Anschließend wird der zweite Part 24 entfaltet, der im wesentlichen durch die Tasche 10 gebildet wird, und zum Schluß der erste Part 23, der im wesentlichen die zweite Kammer 14 darstellt.

Durch Anwendung dieser Faltung wird die erfindugnsgemäß angestrebte Entfaltungstrajektorie weiter optimiert.

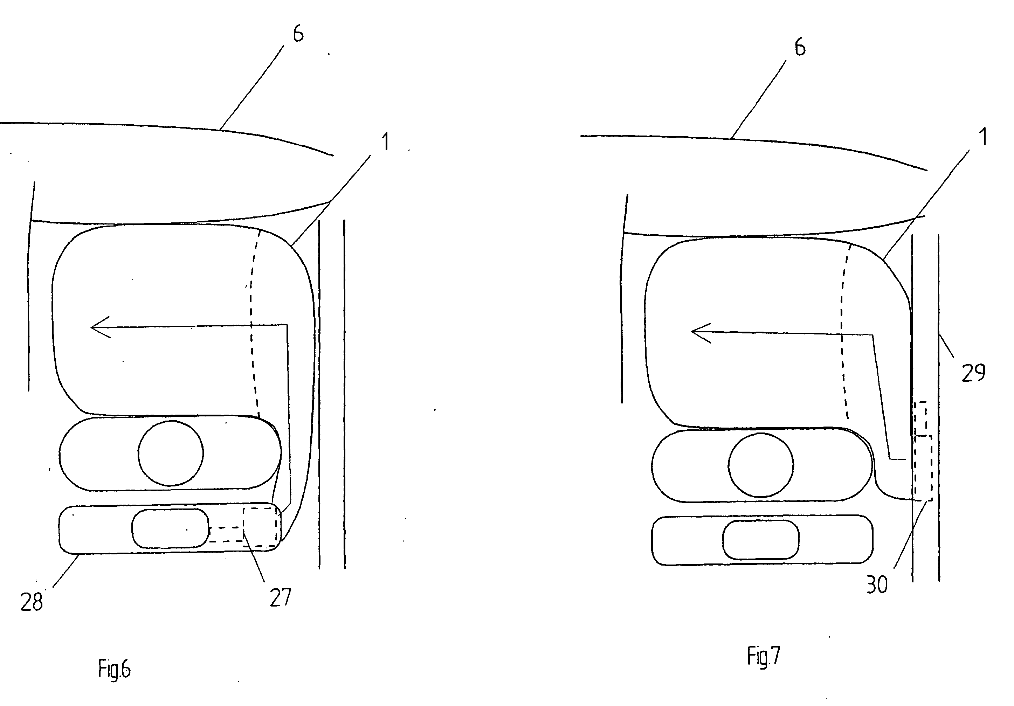

In der Fig. 6 ist ein Frontal-Airbag dargestellt, bei dem ein Airbagmodul 27 in der Sitzlehne 28 eingebaut ist. In der Figur ist eine Ausführung für einen Beifahrer dargestellt. Die gleiche Ausführungsform ist auch für die Fahrerseite möglich.

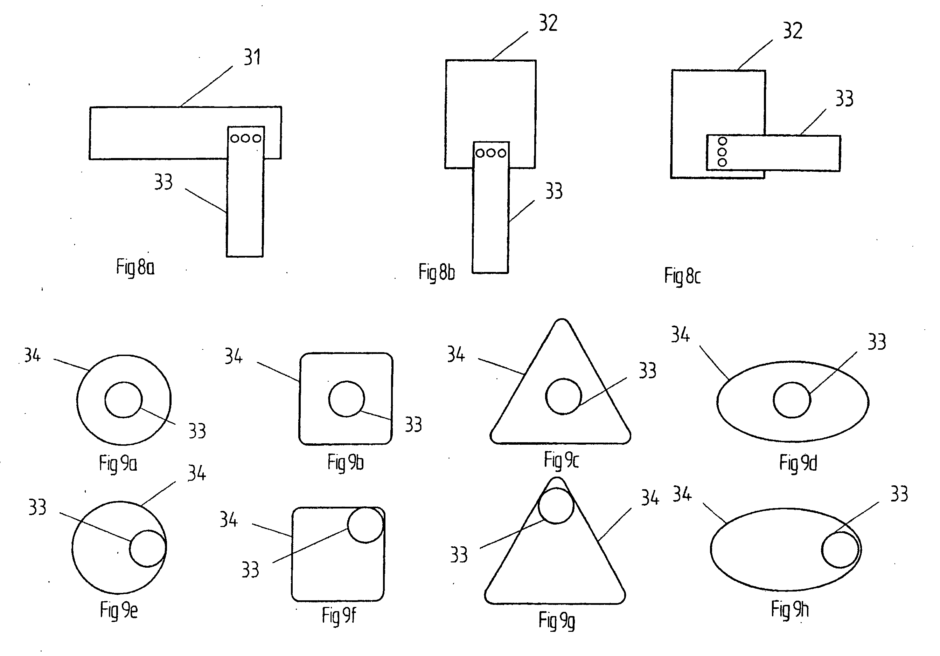

In der Fig. 7 ist ebenfalls ein Frontalairbag dargestellt, bei dem eine Airbagmodul 30 in einer Fahrzeugtür 29 eingebaut ist. In der Figur ist die Ausführung für einen Beifahrer dargestellt. Die gleiche Ausführungsform ist auch für die Fahrerseite möglich.

In den Figuren 8a bis 8c sind drei unterschiedliche Ausführungsformen des Airbagmoduls in Seitenansichten dargestellt. Es ist jeweils ein rechteckförmiges Modulgehäuse 31 bzw. 32 erkennbar, die unterschiedliche Seitenverhältnisse aufweisen. Diesen Modulgehäusen ist jeweils ein Rohrgasgenerator 33 an unterschiedlichen Stellen zugeordnet.

In den Figuren 9a bis 9h sind Airbagmodule in der Draufsicht dargestellt. Es sind die unterschiedlichen Formen des Modulgehäuses 34 und die unterschiedliche Zuordnung des Rohrgasgenerators 33 erkennbar.

## Patentansprüche

1. Airbagmodul mit Modulgehäuse und Gassack, dem ein Gasgenerator zugeordnet ist, wobei der Gassack (1) nacheinander in mehrere Richtungen und dabei zuletzt in Richtung des Insassen (4) entfaltbar ist, der Gassack (1) durch eine Abtrennung in zwei Kammern (10, 14) unterteilt ist, wobei an einer Seite der ersten Kammer (10) eine Anschlußöffnung (15) für den Anschluß des Gassacks (1) an das Modulgehäuse (16) vorgesehen ist und an der anderen Seite dieser ersten Kammer (10) eine Überströmöffnung (17) zur zweiten Kammer (14) vorgesehen ist, die dem Insassen (4) zugewandt ist,
**dadurch gekennzeichnet,**
**daß** die Abtrennung im wesentlichen quer zur Längsachse des Fahrzeugs verläuft, der Gassack (1) um eine Achse senkrecht zur Anschlußöffnung (15) des Gassacks (1) verdreht mit dem Modulgehäuse (16) verbunden ist und im aufgeblasenen Zustand des Gassackes (1) ein Moment (M) um diese Achse vorhanden ist, durch das der Gassack (1) im Bereich der ersten Kammer (10) gegen ein Fahrzeugteil (6) andrückbar und so in seiner Lage stabilisierbar ist.

2. Airbagmodul nach Anspruch 1, **dadurch gekennzeichnet, daß** die erste Kammer (10) quer zur Abtrennung kurzer und damit kleiner ist als die zweite Kammer (14).

3. Airbagmodul nach Anspruch 1 oder 2, **dadurch gekennzeichnet, daß** dieses für einen Beifahrerairbag in der Fahrzeugmitte an der Armaturentafel (2) angeordnet ist, daß sich die Anschlußstelle (18) für den Gassack (1) an der Oberseite der Armaturentafel (2) befindet, daß die Anschlußöffnung (15) des Gassacks (1) einseitig in einem der Mitte des Fahrzeugs zugewandten Abschnitt der ersten Kammmer (10) vorgesehen ist, daß die Überströmöffnung (17) zur Verbindung der beiden Kammern (10, 14) an einer Seite des Gasacks (1) vorgesehen ist, die der rechten Fahrzeugseite zugewandt ist, und daß der Gassack (1) so mit dem Modulgehäuse (16) verbunden ist, daß er sich in ausgebreiteter, nicht aufgeblasener Lage schräg in Richtung Beifahrer (4) erstreckt.

4. Airbagmodul nach mindestens einem der vorhergehenden Ansprüche, **dadurch gekennzeichnet, daß** der Gassack (1) so mit dem Modulgehäuse (16) verbunden ist, daß er sich in ausgebreiteter nicht aufgeblasener Lage unter 45° bezüglich der Längsachse des Fahrzeugs in Richtung Beifahrer (4) erstreckt.

5. Airbagmodul nach mindestens einem der vorhergehenden Ansprüche, **dadurch gekennzeichnet, daß** als stabilisierendes Fahrzeugteil für den aufgeblasenen Gassack die Windschutzscheibe (6) oder A-Säule vorgesehen ist.

6. Airbagmodul nach mindestens einem der vorhergehenden Ansprüche, **dadurch gekennzeichnet, daß** der gefaltete Gassack (1) in einem unter der Armaturentafel (2) angeordneten topfartigen Modulgehäuse (16) untergebracht ist, in das von unten ein Rohrgasgenerator (26) ragt.

7. Airbagmodul nach Anspruch 2, **dadurch gekennzeichnet, daß** als kleinere Kammer eine gesonderte Tasche (10) im Gassack (1) vorgesehen ist.

8. Airbagmodul nach Anspruch 7, **dadurch gekennzeichnet, daß** die Tasche (10) an jeweils mindestens einer Stelle mit gegenüberliegenden Seiten des Gassacks (1) verbunden ist.

9. Airbagmodul nach Anspruch 7 oder 8, **dadurch gekennzeichnet, daß** die Tasche (10) über Fangbänder mit gegenüberliegenden Seiten des Gassacks verbunden ist.

10. Airbagmodul nach mindestens einem der vorhergehenden Ansprüche, **dadurch gekennzeichnet, daß** der Gassack als 2D-Gassack mit Unterplatte (7) und Oberplatte (8) ausgebildet ist, die am Umfang miteinander verbunden sind, und daß die Anschlußöffnung (15) des Gassacks (1) an das Modulgehäuse (16) im Bereich der Unterplatte (7) vorgesehen ist.

11. Airbagmodul nach Anspruch 10, **dadurch gekennzeichnet, daß** die Tasche (10) mittels der Umfangsnaht (9) der Unter- und Oberplatte (7, 8) befestigt ist und im mittleren Bereich bogenförmig mit beiden verbunden ist.

12. Airbagmodul nach mindestes einem der vorhergehenden Ansprüche, **dadurch gekennzeichnet, daß** der Gassack (1) in ausgebreiteter, nicht aufgeblasener Lage rechteckförmig ist und abgerundete Ecken aufweist.

13. Airbagmodul nach mindestens einem der vorhergehenden Ansprüche, **dadurch gekennzeichnet, daß** der Gassack (1) so gefaltet ist, daß bei dem mit der Anschlußöffnung (15) nach unten ausgebreiteten Gassack (1) der von der Anschlußöffung (15) ausgehende größere Abschnitt (23, 24) des Gassacks (1) in Richtung des Mödulgehäuses (16) nach unten eingeschlagen ist und gerafft im Modulgehäuse (16) untergebracht ist, und daß der von der Anschlußöffnung (15) ausgehende kleinere Abschnitt (25) des Gassacks (1) über dem gerafften Teil des Gassacks (1) im Modulgehäuse (16) liegt.

14. Airbagmodul nach mindestens einem der vorangehenden Ansprüche, **dadurch gekennzeichnet, daß** der Gassack (1) nacheinander in drei Richtungen entfaltbar ist, wobei sich der Gassack (1)
a) in einer ersten Phase aus der Anschlußöffnung (15) heraus in vertikaler Richtung,
b) in einer zweiten Phase quer zur Längsachse des Fahrzeugs und
c) in einer dritten Phase in Richtung des Insassen entfaltet.

## Claims

1. Airbag module having a module housing and gas bag to which a gas generator is assigned, where the gas bag (1) can be deployed sequentially in a number of directions and, in the process, ultimately in the direction of the occupant (4), the gas bag (1) is divided into two chambers (10, 14) by a separation, where a connecting opening (15) for the connection of the gas bag (1) to the module housing (16) is provided on one side of the first chamber (10) and on the other side of this first chamber (10) an overflow opening (17) to the second chamber (14), which faces the occupant (4), is provided, **characterized in that** the separation runs essentially transversely with respect to the longitudinal axis of the vehicle, the gas bag (1) is connected to the module housing (16) in a manner twisted about an axis perpendicular with respect to the connecting opening (15) of the gas bag (1) and when the gas bag (1) is inflated, a torque (M) is present about this axis by means of which the gas bag (1) can be pushed in the region of the first chamber (10) against a vehicle part (6) and can thus be stabilized in its position.

2. Airbag module according to claim 1, **characterized in that** the first chamber (10) is shorter and therefore smaller transversely with respect to the separation than the second chamber (14).

3. Airbag module according to claim 1 or 2, **characterized in that** the latter, for a front passenger's airbag, is arranged in the center of the vehicle on the dashboard (2), **in that** the connecting point (18) for the gas bag (1) is located on the upper side of the dashboard (2), **in that** the connecting opening (15) for the gas bag (1) is provided on one side in a section of the first chamber (10), which section faces the center of the vehicle, **in that** the overflow opening (17) for connecting the two chambers (10, 14) is provided on a side of the gas bag (1) which faces the right-hand side of the vehicle, and **in that** the gas bag (1) is connected to the module housing (16) in such a manner that in an unfolded, non-inflated position it extends obliquely in the direction of the front passenger (4).

4. Airbag module according to at least one of the preceding claims, **characterized in that** the gas bag (1) is connected to the module housing (16) in such a manner that in an unfolded, non-inflated position it extends in the direction of the front passenger (4) at 45° with regard to the longitudinal axis of the vehicle.

5. Airbag module according to at least one of the preceding claims, **characterized in that** the windscreen (6) or A-pillar is provided as the stabilizing part of the vehicle for the inflated gas bag.

6. Airbag module according to at least one of the preceding claims, **characterized in that** the folded gas bag (1) is accommodated in a cup-like module housing (16) which is arranged under the dashboard (2) and into which a tubular gas generator (26) protrudes from below.

7. Airbag module according to claim 2, **characterized in that** a separate pocket (10) is provided in the gas bag (1) as the smaller chamber.

8. Airbag module according to claim 7, **characterized in that** the pocket (10) is connected at in each case at least one point to opposite sides of the gas bag (1).

9. Airbag module according to claim 7 or 8, **characterized in that** the pocket (10) is connected to opposite sides of the gas bag via catch straps.

10. Airbag module according to at least one of the preceding claims, **characterized in that** the gas bag is designed as a 2D gas bag having a low panel (7) and an upper panel (8) which are connected to each other at the circumference, and **in that** the opening (15) connecting the gas bag (1) to the module housing (16) is provided in the region of the lower panel (7).

11. Airbag module according to claim 10, **characterized in that** the pocket (10) is attached by means of the circumferential seam (9) of the lower and upper panel (7, 8)) and is connected in the central region in a curved manner to both of the panels.

12. Airbag module according to at least one of the preceding claims, **characterized in that** the gas bag (1) is rectangular and has rounded corners in an unfolded, non-inflated position.

13. Airbag module according to at least one of the preceding claims, **characterized in that** the gas bag (1) is folded in such a manner that, when the gas bag (1) is unfolded with the connecting opening (15) downward, the larger section (23, 24) of the gas back (1) issuing from the connecting opening (15) is tucked in downward in the direction of the module housing (16) and is accommodated in a gathered manner in the module housing (16), and **in that** the smaller section (25) of the gas bag (1) issuing from the connecting opening (15) lies over the gathered part of the gas bag (1) in the module housing (16).

14. Airbag module according to at least one of the preceding claims, **characterized in that** the gas bag (1) can be deployed sequentially in three directions, in which case the gas bag (1) is deployed
a) out of the connecting opening (15) in the vertical direction in a first phase,
b) transversely with respect to the longitudinal axis of the vehicle in a second phase, and
c) in the direction of the occupant in a third phase.

## Revendications

1. Module d'airbag comportant un boîtier et un sac à gaz, auquel est associé un générateur de gaz, et dans lequel le sac à gaz (1) peut être déployé successivement dans plusieurs directions et finalement en direction du passager (4), et le sac à gaz (1) est divisé par une séparation en deux chambres (10, 14) et dans lequel une ouverture de raccordement (15) pour le raccordement du sac à gaz (1) au boîtier (16) du module est prévu sur un côté de la première chambre (10), et une ouverture de transfert (17) est prévue sur l'autre côté de cette première forme (10) en direction de la seconde chambre (14) qui est tournée vers le passager (4), **caractérisé en ce que** la séparation s'étend essentiellement transversalement par rapport à l'axe longitudinal du véhicule, que le sac à gaz (1) est relié au boîtier (16) du module en étant pivoté autour de l'axe perpendiculairement à l'ouverture de raccordement (15) du sac à gaz (1), et lorsque le sac à gaz (1) est à l'état gonflé, un moment (M) est présent autour de cet axe, moment au moyen duquel le sac à gaz (1) peut être repoussé dans la zone de la seconde chambre (10) contre une partie (6) du véhicule et peut ainsi être stabilisé dans sa position.

2. Module d'airbag selon la revendication 1, **caractérisé en ce que** la première chambre (10) est plus courte transversalement par rapport à la séparation et par conséquent est plus petite que la seconde chambre (14).

3. Module d'airbag selon la revendication 1 ou 2, **caractérisé en ce que** ce module d'airbag est disposé en tant qu'airbag du passager avant, au centre du véhicule sur le tableau de bord (2), que le point de raccordement (18) pour le sac de gaz (1) est situé sur le côté supérieur du tableau de bord (2), que l'ouverture de raccordement (15) du sac à gaz (1) est prévue d'un côté dans une partie, tournée vers le centre du véhicule, de la première chambre (10), que l'ouverture de transfert (17) servant à relier les deux chambres (10, 14) est prévue d'un côté du sac à gaz (1), qui est tourné vers le côté droit du véhicule, et que le sac à gaz (1) est relié au boîtier (16) du module de telle sorte qu'il s'étend dans une position étalée, non gonflée, obliquement dans la direction du passager avant (4).

4. Module d'airbag selon au moins l'une des revendications précédentes, **caractérisé en ce que** le sac à gaz (1) est relié au module (16) du boîtier de telle sorte que dans sa position étalée, non gonflée, il fait un angle de 45° par rapport à l'axe longitudinal du véhicule en direction du passager avant (4).

5. Module d'airbag selon au moins l'une des revendications précédentes, **caractérisé en ce qu'**il est prévu comme partie stabilisatrice du véhicule pour le sac à gaz gonflé, le pare-brise (6) ou le montant A.

6. Module d'airbag selon au moins l'une des revendications précédentes, **caractérisé en ce que** le sac à gaz replié (1) est logé dans un boîtier (16) du module en forme de pot, disposé au-dessous du tableau de bord (2) et dans lequel un générateur de gaz brut (26) pénètre à partir du bas.

7. Module d'airbag selon la revendication 2, **caractérisé en ce qu'**il est prévu comme chambre la plus petite, une poche séparée (10) située dans le sac à gaz (1).

8. Module d'airbag selon la revendication 7, **caractérisé en ce que** la poche (10) est reliée respectivement au moins un emplacement à des côtés opposés du sac à gaz (1).

9. Module d'airbag selon la revendication 7 ou 8, **caractérisé en ce que** la poche (10) est reliée au moyen de bords de saisie à des côtés opposés du sac à gaz.

10. Module d'airbag selon au moins l'une des revendications précédentes, **caractérisé en ce que** le sac à gaz est agencé sous la forme d'un sac à gaz bidimensionnel comportant une plaque inférieure (7) et une plaque supérieure (8), qui sont reliées entre elles sur la périphérie, et que l'ouverture de raccordement (15) du sac à gaz (15) est prévue dans le boîtier (16) du module dans la zone de la plaque inférieure (7).

11. Module d'airbag selon la revendication 10, **caractérisé en ce que** la poche (10) est fixée à l'aide du cordon périphérique (9) de la plaque inférieure et de la plaque supérieure (7, 8) et est reliée avec une forme arquée, dans la partie médiane, aux deux plaques.

12. Module d'airbag selon au moins l'une des revendications précédentes, **caractérisé en ce que** le sac à gaz (1) possède une forme rectangulaire dans la position étalée, non gonflée et possède des coins arrondis.

13. Module d'airbag selon au moins l'une des revendications précédentes, **caractérisé en ce que** le sac à gaz (1) est replié de telle sorte que lorsque le sac à gaz (1) est étalé avec l'ouverture de raccordement (15) dirigée vers le bas, la partie la plus grande (23, 24), qui s'étend à partir de l'ouverture de raccordement (15) du sac à gaz (1) est rabattue vers le bas en direction du boîtier (7) du module et est logée à l'état retroussé dans le boîtier (16) du module et que la partie la plus petite (25), qui s'étend à partir de l'ouverture de raccordement (15), du sac à gaz (1) est située au-dessus de la partie retroussée du sac à gaz (1) dans le boîtier (16) du module.

14. Module d'airbag selon au moins l'une des revendications précédentes, **caractérisé en ce que** le sac à gaz (1) peut être déplié successivement dans trois direction, le sac à gaz (1) étant déplié
a) dans une première phase, dans une direction verticale à partir de l'ouverture de raccordement (15),
b) dans une seconde phase, transversalement par rapport à l'axe longitudinal du véhicule, et
c) dans une troisième phase, en direction du passager.
